# EUROPEAN PATENT APPLICATION

(11) **EP 1 726 826 A2**
(43) Date of publication of application: **29.11.2006**
(21) Application number: 06112101.8
(22) Date of filing: 31.03.2006
(51) Int. Cl.: F04B 1/26, F04B 1/32, F04B 49/08, F04B 23/04, F04B 1/22, F04B 17/05, F04B 49/00

(54) **Hydraulic pump unit**

(30) Priority: 18.05.2005 JP 2005145235
(71) Applicant: KANZAKI KOKYUKOKI MFG. CO., LTD., Amagasaki-shi, Hyogo 661-0981 (JP)
(72) Inventor: Ohashi, Ryota, Kanzaki Kokyukoki MFG. Co., LTD., Amagasaki-shi Hyogo 661-0981 (JP)
(74) Representative: Peckmann, Ralf

(57) **Abstract**

There is provided a hydraulic pump unit of variable displacement type disposed away from a pair of hydraulic motor units which are capable of being independently arranged, the pump unit fluid-connected to the pair of hydraulic motor units so as to change the outputs of the pair of hydraulic motor units in both forward and reverse rotation directions. The pump unit includes a hydraulic pump body operatively rotated and driven by a driving source, a pump case surrounding the hydraulic pump body, a capacity adjusting mechanism for changing the capacity of the hydraulic pump body, and an actuator for operating the capacity adjusting mechanism. The actuator is controlled based on a manual operation signal corresponding to a manual operation amount.

## Description

### BACKGROUND OF THE INVENTION

### Field of the Invention

The present invention relates to a hydraulic pump unit of variable displacement type disposed away from a pair of hydraulic motor units which are capable of being independently arranged, the hydraulic pump unit fluid-connected to the pair of hydraulic motor units so as to change the outputs of the pair of hydraulic motor units in both forward and reverse directions.

### Related Art

It has been conventionally known that a hydraulic pump unit of variable displacement type and a hydraulic motor unit, which are fluid-connected to each other so as to form an HST, are configured to be capable of being independently arranged.

The hydraulic pump unit and the hydraulic motor unit are particularly useful in a working vehicle needing to provide a space between a pair of driving wheels so as to stabilize the body posture at the time of turning such as a mower tractor capable of turning in place (zero turn) (for example, see U.S. Pat. No. 6,425,244).

For details, the hydraulic pump unit of variable displacement type is provided with a hydraulic pump body operatively rotated and driven by a driving source, and a capacity adjusting mechanism for changing the capacity of the hydraulic pump body. The output of the hydraulic motor unit can be changed by operating the capacity adjusting mechanism.

However, in the conventional hydraulic pump unit of variable displacement type, since the capacity adjusting mechanism is merely connected to a manual controlling member such as a traveling lever erected from right and left side floors of a driver sheet via a machinery link mechanism, large manual operation power and manual operation amount are required for the travel operation of a vehicle.

Since the large manual operation power and the manual operation amount are required for the operation of the capacity adjusting mechanism, it is difficult to miniaturize the controlling member.

Furthermore, in the conventional constitution, there is a problem in that the fluctuation of the load to the hydraulic motor unit causes the fluctuation of the output amount of the hydraulic motor unit even when the amount of operation of the manual operation member is constant.

That is, the load to the hydraulic motor unit is fluctuated according to travel conditions such as a state of a travel surface and the existence of pulling.

When the load fluctuation to the hydraulic motor unit is occurred, the output amount of the hydraulic motor unit is fluctuated even when the tilting amount of the capacity adjusting mechanism is constant.

The conventional constitution has not been sufficiently considered in view of this point.

The present invention has been accomplished in view of the prior art, and it is an object of the present invention to provide a hydraulic pump unit of variable displacement type capable of reducing the manual operation power and the manual operation amount for changing the capacity of the hydraulic pump body.

It is another object of the present invention to provide a hydraulic pump unit of variable displacement type capable of obtaining the output of the hydraulic motor unit corresponding to the amount of operation of the manual operation member in spite of the fluctuation of the load to the hydraulic motor unit forming an HST in cooperation with the hydraulic pump unit.

### SUMMARY OF THE INVENTION

According to the present invention, there is provided a hydraulic pump unit of variable displacement type disposed away from a pair of hydraulic motor units which are capable of being independently arranged, the pump unit fluid-connected to the pair of hydraulic motor units so as to change the outputs of the pair of hydraulic motor units in both forward and reverse rotation directions.

The hydraulic pump unit includes a hydraulic pump body operatively rotated and driven by a driving source, a pump case surrounding the hydraulic pump body, a capacity adjusting mechanism for changing the capacity of the hydraulic pump body, and an actuator for operating the capacity adjusting mechanism. The actuator is controlled based on a manual operation signal corresponding to a manual operation amount.

With this configuration, the manual operation power and the manual operation amount required for operating the capacity adjusting mechanism can be reduced. Therefore, the manual operation member for operating the capacity adjusting mechanism can be miniaturized.

Preferably, the actuator is controlled based on a feedback signal corresponding to outputs of the pair of the hydraulic motor units, in addition to the manual operation signal.

With this configuration, even when the load fluctuation to the hydraulic motor units occurs, the output amounts of the hydraulic motor units could be corresponded to the operation amount of the travel operation mechanism.

In the above various configurations, the hydraulic pump body may preferably include first and second hydraulic pump bodies respectively and independently fluid-connected to the pair of hydraulic motor units, the capacity adjusting mechanism may include first and second capacity adjusting mechanisms respectively corresponding to the first and second hydraulic pump bodies, and the actuator may include first and second actuators respectively corresponding to the first and second capacity adjusting mechanisms.

Alternatively, in a case where the pair of hydraulic motor units are fluid-connected to each other so as to form a closed circuit, the hydraulic pump body may include a single hydraulic pump body for traveling fluid-connected to the closed circuit, and a hydraulic pump body fluid-connected to the other hydraulic actuator other than the pair of hydraulic motor units.

In the above various configurations, the actuator may be a hydraulic servomechanism. The hydraulic servomechanism includes a servo piston operatively connected to the capacity adjusting mechanism and accommodated in a reciprocating manner within a piston accommodating chamber so as to divide the piston accommodating chamber into a regular rotation oil chamber and a reverse rotation oil chamber, a supply/discharge oil passage for supplying operating oil to and discharging it from the servo piston, and an electromagnetic valve for switching the supply/discharge oil passage.

Alternatively, the actuator may be an electronic motor operatively connected to the capacity adjusting mechanism.

Preferably, the electronic motor is connected to the capacity adjusting mechanism via a reduction gear mechanism.

### BRIEF DESCRIPTION OF THE DRAWINGS

The above, and other objects, features and advantages of the present invention will become apparent from the detailed description thereof in conjunction with the accompanying drawings wherein.
FIG. 1 is a schematic side view of a working vehicle to which a hydraulic pump unit according to a first embodiment of the present invention is applied.
FIG. 2 is a schematic perspective view of the working vehicle shown in FIG. 1.
FIG. 3 is a hydraulic circuit diagram of the working vehicle shown in FIGS. 1 and 2.
FIG. 4 is a sectional view taken in IV-IV line in FIG. 1.
FIG. 5 is a sectional view taken in V-V line in FIG. 4.
FIG. 6 is a sectional view taken in VI-VI line in FIG. 5.
FIG. 7 is a sectional view taken in line VII-VII in FIG. 6.
FIG. 8 (a) is a schematic control diagram showing a controlling method of electromagnetic valves in the hydraulic pump unit according to the first embodiment.
FIG. 8 (b) is a schematic control diagram showing another controlling method of the electromagnetic valves.
FIG. 8 (c) is a schematic control diagram showing a controlling method of the electromagnetic valves in a case where the hydraulic pump unit of the first embodiment is applied to a working vehicle with a single traveling operation member.
FIG. 8 (d) is a schematic control diagram showing another controlling method of the electromagnetic valves in a case where the hydraulic pump unit of the first embodiment is applied to a working vehicle with a single traveling operation member.
FIG. 9 is a schematic perspective view of another working vehicle to which the hydraulic pump unit of the first embodiment is applied.
FIG. 10 is a perspective view of an example of a travel operation mechanism in the working vehicle.
FIG. 11 is a sectional view of a hydraulic pump unit according to a second embodiment.
FIG. 12 is a sectional view of a hydraulic pump unit according to a third embodiment.
FIG. 13 is a hydraulic circuit diagram of a working vehicle to which a hydraulic pump unit according to a fourth embodiment is applied.
FIG. 14 is an exploded perspective view of the hydraulic pump unit of the fourth embodiment.
FIG. 15 is an exploded perspective view of a hydraulic pump unit according to a fifth embodiment.
FIG. 16 is a sectional view of a hydraulic pump unit according to a sixth embodiment.
FIG. 17 is a hydraulic circuit diagram of a working vehicle to which a hydraulic pump unit according to a seventh embodiment is applied.

### DETAILED DESCRIPTION OF THE PREFERRED EMBODIMENTS

### Embodiment 1

Hereinafter, a preferred embodiment of a hydraulic pump unit according to the present invention will be described referring to the accompanying drawings.

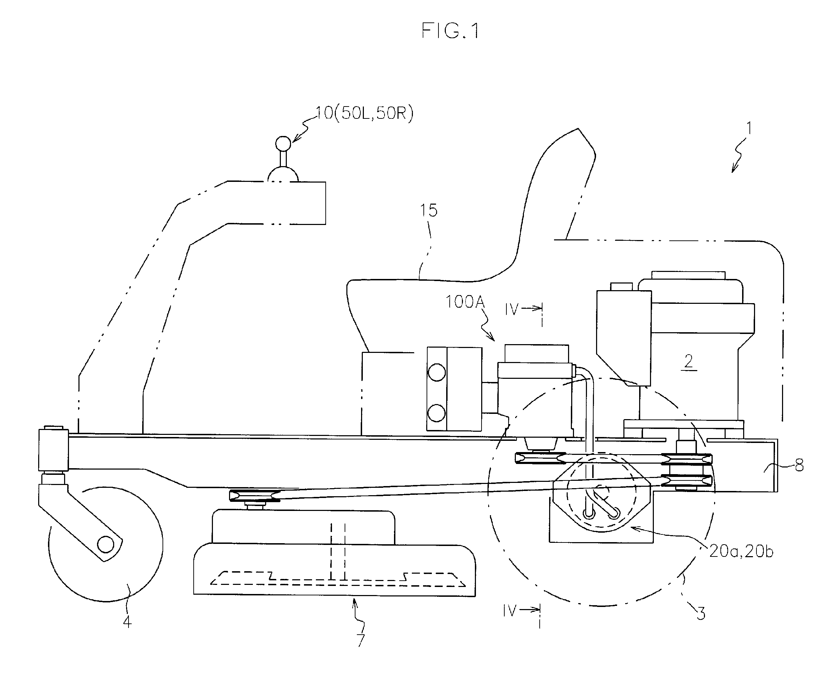

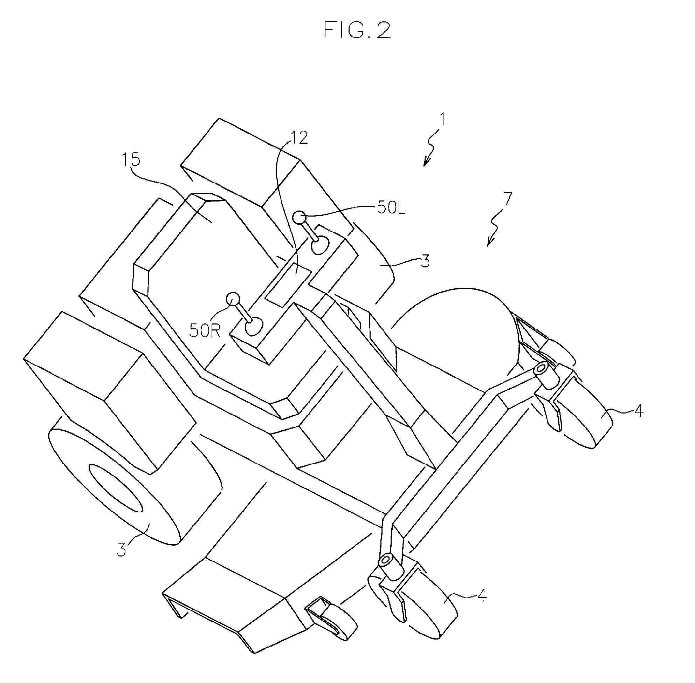

FIGS. 1 and 2 show a schematic side view and a schematic perspective view of a working vehicle 1 to which a hydraulic pump unit 100A according to the present embodiment is applied, respectively.

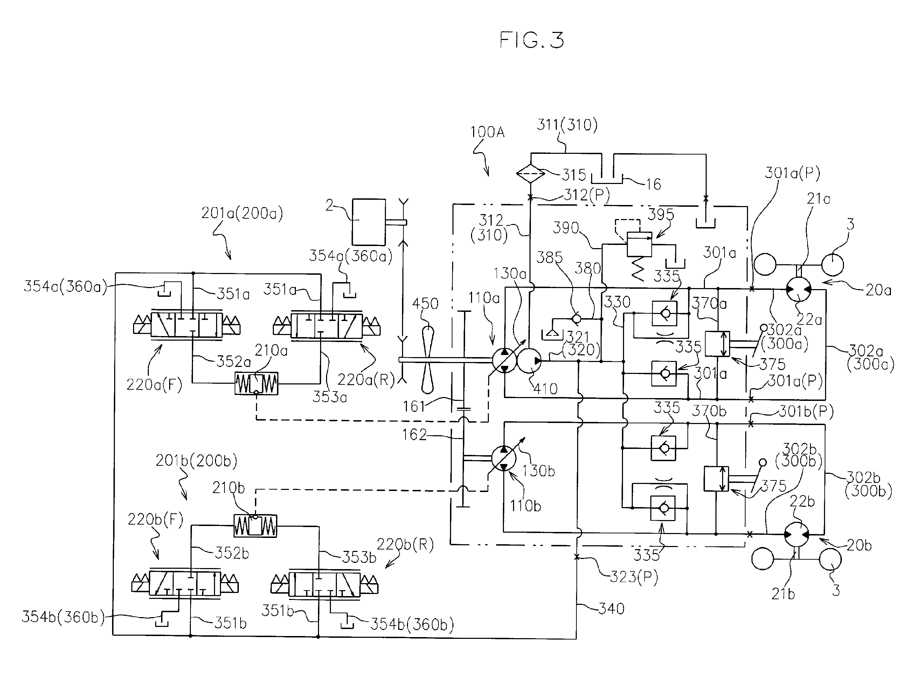

FIG. 3 shows a hydraulic circuit diagram of the working vehicle 1.

As shown in FIGS. 1 to 3, the working vehicle 1 is provided with a vehicle frame 8, a driving source 2 supported by the vehicle frame 8, a pair of right and left driving wheels 3 (rear wheels in the present embodiment), caster wheels 4 (a pair of front wheels in the present embodiment), first and second hydraulic motor units 20a, 20b for respectively and independently driving the pair of driving wheels 3, a hydraulic pump unit 100A of variable displacement type according to the present embodiment, and a travel operation mechanism 10 for changing the supply-discharge oil amount of the hydraulic pump unit 100A and capable of being manually operated.

Numeral 15 in FIG. 1 or 2 designates a driver seat. A nearly T-shaped steering post is erected from a floor in front of the driver seat 15, and the travel operation mechanism 10 is arranged on the upper surface of the post. Numeral 7 designates a mower apparatus supported by the vehicle frame 8 so as to be located between the driving wheels 3 and the caster wheels 4 in the longitudinal direction of the vehicle.

In the working vehicle 1, the mower apparatus 7 is operatively driven by the driving source 2 via a pulley/ belt mechanism.

The first and second hydraulic motor units 20a, 20b can be independently arranged to each other, and are symmetrically arranged in a vehicle width direction so as to be located near the corresponding driving wheels 3.

The first and second hydraulic motor units 20a, 20b respectively have first and second motor shafts 21 a, 21 b operatively connected to the corresponding driving wheels 3, and first and second hydraulic motor bodies 22a, 22b for rotating and driving the corresponding motor shafts 21 a, 21 b.

In the present embodiment, both the first and second hydraulic motor units 20a, 20b are of a fixed displacement type in which the supply-discharge oil amount of the hydraulic motor bodies are fixed.

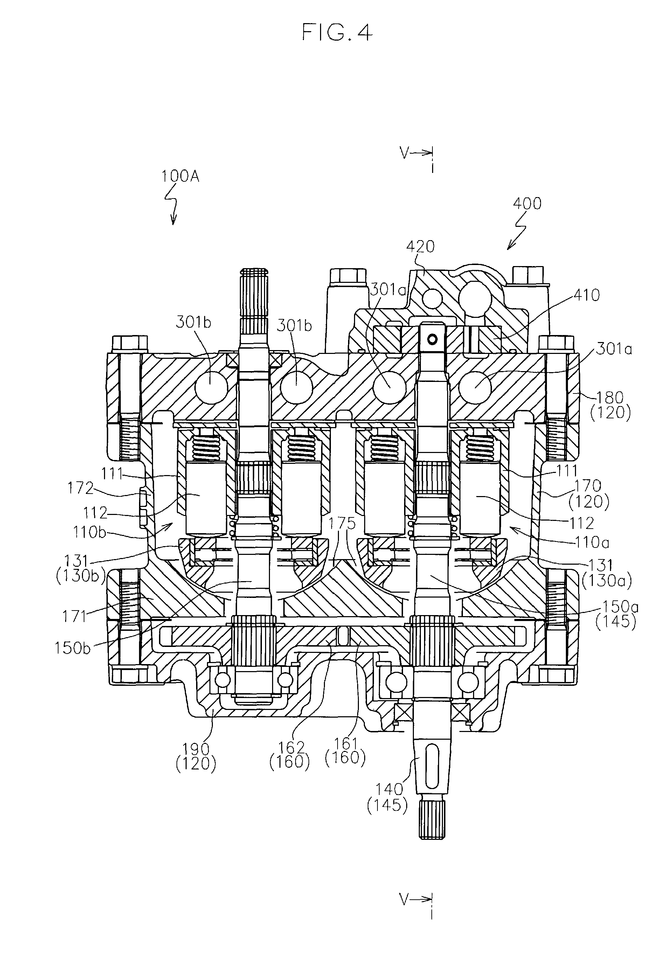

FIG. 4 shows a longitudinal sectional front view of the hydraulic pump unit 100A taken in IV-IV line in FIG. 1.

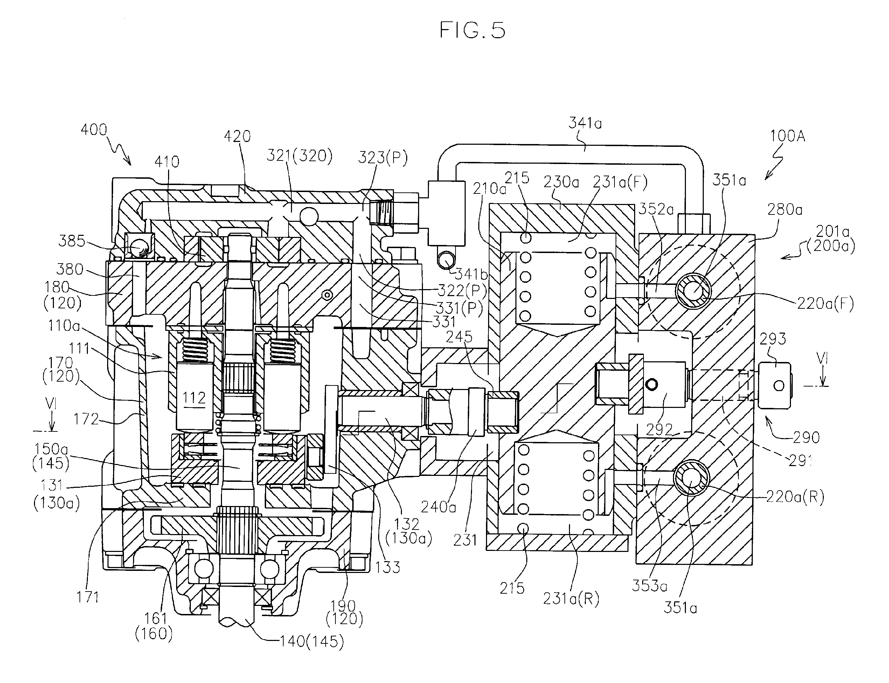

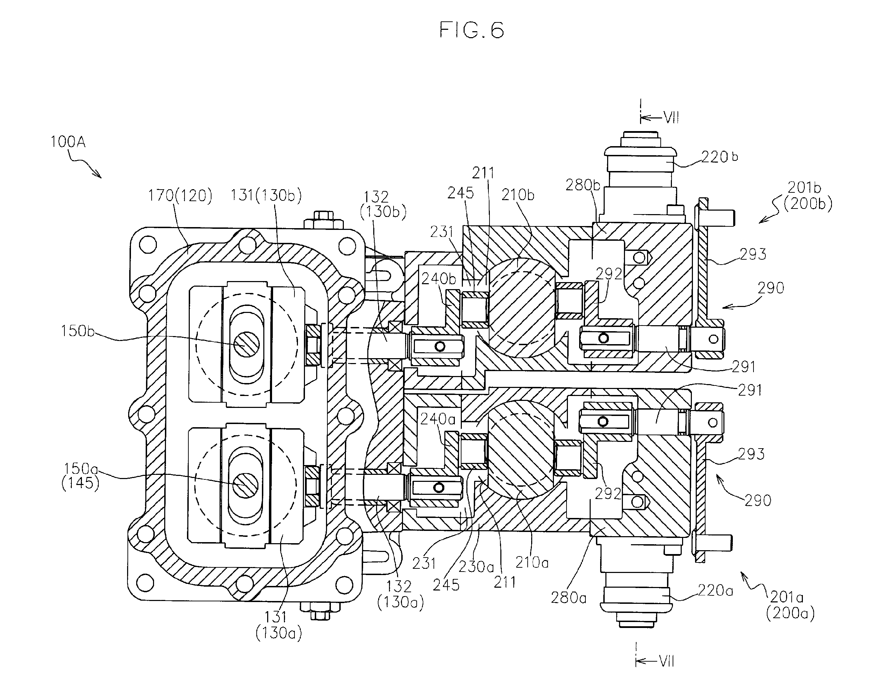

FIGS. 5 and 6 show sectional front views taken in V-V line in FIG. 4 and taken in VI-VI line in FIG. 5, respectively.

As shown in FIGS. 4 to 6, the hydraulic pump unit 100A is provided with a hydraulic pump body 110 operatively rotated and driven by the power from the driving source 2, a pump case 120 for surrounding the hydraulic pump body, a capacity adjusting mechanism 130 for changing the capacity of the hydraulic pump body, and an actuator 200 for operating the capacity adjusting mechanism 130 according to a manual operation.

In the present embodiment, the hydraulic pump unit 100A has first and second hydraulic pump bodies 110a, 110b as the hydraulic pump body 110.

The first hydraulic pump body 1 10a is fluid-connected to the first hydraulic motor body 22a via a pair of first operation oil lines 300a so as to form a first HST in cooperation with the first hydraulic motor body 22a.

The second hydraulic pump body 110b is fluid-connected to the second hydraulic motor body 22b via a pair of second operation oil lines 300b so as to form a second HST in cooperation with the second hydraulic motor body 22a.

The hydraulic pump unit 100A, therefore, has first and second capacity adjusting mechanisms 130a, 130b for respectively changing the capacities of the first and second hydraulic pump bodies 110a, 110b as the capacity adjusting mechanism 130, and has first and second actuators 200a, 200b for respectively operating the first and second capacity adjusting mechanisms 130a, 130b as the actuator 200.

The hydraulic pump unit 100A is further provided with an input shaft 140 supported by the pump case 120 so as to be operatively connected to the driving source 2, first and second pump shafts 150a, 150b supported by the pump case 120 so as to rotate and drive the first and second pump bodies 110a, 110b, respectively, and a power transmission mechanism 160 accommodated in the pump case 120 so as to transmit the power from the input shaft 140 to the first and second pump shafts 150a, 150b.

In the present embodiment, the input shaft 140 and the first pump shaft 150a are integrally formed by a single shaft 145 (see FIGS. 4,5).

The pump case 120 is configured so as to accommodate both the first and second hydraulic pump bodies 110a, 110b.

Specifically, the pump case 120 has a single case body 170, a single port block 180 (center section) detachably connected to the case body 170, and a single lid member 190 detachably connected to the case body 170.

As shown in FIGS. 4 to 6, the case body 170 has an end wall 171 extending in the direction substantially orthogonal to the axis line direction of the pump shafts 150a, 150b, and a peripheral wall 172 extending in the axis line direction of the pump shaft 150a, 150b from the peripheral portion of the end wall 171.

The peripheral wall 172 has an opening at a free end side opposite to the end wall 171.

The opening is set to a size enough to insert the first and second hydraulic pump bodies 110a, 110b theretrough.

The port block 180 has supply/ discharge oil passages for the first and second hydraulic pump bodies 110a, 110b. The port block 180 is connected to the case body 170 so as to liquid-tightly close the opening in a state where the supply/discharge oil passages are fluid-connected to the first and second hydraulic pump bodies 110a, 110b.

That is, the first and second hydraulic pump bodies 110a, 110b are accommodated in a pump accommodating space defined by the case body 170 and the port block 180.

The lid member 190 is connected to the case body 170 so as to define a power transmission mechanism accommodating space for accommodating the power transmission mechanism 160 between the lid member 190 and the end wall 171.

The input shaft 140 is supported by the pump case 120 with a first end forming an input end extended outward.

As shown in FIG. 1, the driving source 2 is of a vertical crankshaft type in the present embodiment. Therefore, the input shaft 140 is supported by the pump case 120 so that the input end is projected vertically. However, when the driving source 2 is of a horizontal crankshaft type, the input shaft may be supported by the pump case 120 so that the input end is horizontally projected.

The first and second pump shafts 150a, 150b are supported at the both sides by the lid member 190 and the plate member 180 so as to support the corresponding hydraulic pump bodies 110a, 110b within the pump accommodating space.

At least one end of one of or both the first and second pump shafts 150a, 150b is preferably projected outward from the pump case 120.

The projecting end is used as a driving shaft for a charge pump body and/or other rotating member attached to the hydraulic pump unit 100A if desired.

In the present embodiment, as described above, the input shaft 140 and the first pump shaft 150a are integrally formed by the single shaft 145.

As shown in FIG. 4, the single shaft 145 has a first end projecting outward through the lid member 190 so as to form the input end and a second end projecting outward through the port block 180.

The second end of the single shaft 145 acts as a driving shaft for a charge pump body 410 to be described later.

In the present embodiment, the first end of the single shaft 145 forms the input end operatively connected to the driving source 2, and also acts as a driving shaft for a cooling fan 450 (see FIG. 3).

In the present embodiment, as shown in FIG. 4, the second pump shaft 150b has a second end projecting outward through the port block 180 so as to output the rotation power to the exterior.

The power transmission mechanism 160 is configured so as to transmit the power from the input shaft 140 to the first and second pump shafts 150a, 150b.

In the present embodiment, as shown in FIGS. 4, 5, the power transmission mechanism 160 has a driving gear 161 supported in a relatively non-rotatable manner on the single shaft 145, and a driven gear 162 supported in a relatively non-rotatable manner on the second pump shaft 150b so as to be engaged with the driving gear 161.

As shown in FIGS. 4, 5, the first and second hydraulic pump bodies 110a, 110b include cylinder blocks 111 supported in a relatively non-rotatable manner on the corresponding pump shafts 150a, 150b within the pump accommodating space, and piston units 112 accommodated in the corresponding cylinder blocks 111 in a reciprocating manner along the axis line direction and in a relatively non-rotatable manner.

The first and second capacity adjusting mechanisms 130a, 130b include output adjusting members 131 for changing the reciprocating range of the piston unit 112 in the corresponding hydraulic pump bodies 110a, 110b according to its tilting position, and control shafts 132 having a base end operatively connected to the corresponding output adjusting member 131 so as to tile the corresponding output adjusting member 131.

As shown in FIG. 4, in the present embodiment, a cradle type movable swash plate is used as the output adjusting member 131.

That is, a recessed arching swash plate receiving surface 175 is formed on the inner surface (the surface facing the hydraulic pump bodies 110a, 110b) of the end wall 171. The cradle type movable swash plate 131 is configured so that one end surface is operatively engaged with the free end of the piston unit 112 and the other end surface is engaged with the arching swash plate receiving surface 175 via a thrust metal having the same shape.

The control shaft 132 is supported by the peripheral wall 172 of the case body 170 in a rotatable manner about its axis, and is configured to tile the movable swash plate 131 by rotating about its axis.

For details, as shown in FIGS. 5, 6, the control shaft 132 is supported in a rotatable manner about its axis by the peripheral wall 172 of the case body 170 in a state where the base end is operatively connected to the movable swash plate 131 via an arm 133 and the tip end can be accessed from outside of the pump case 120.

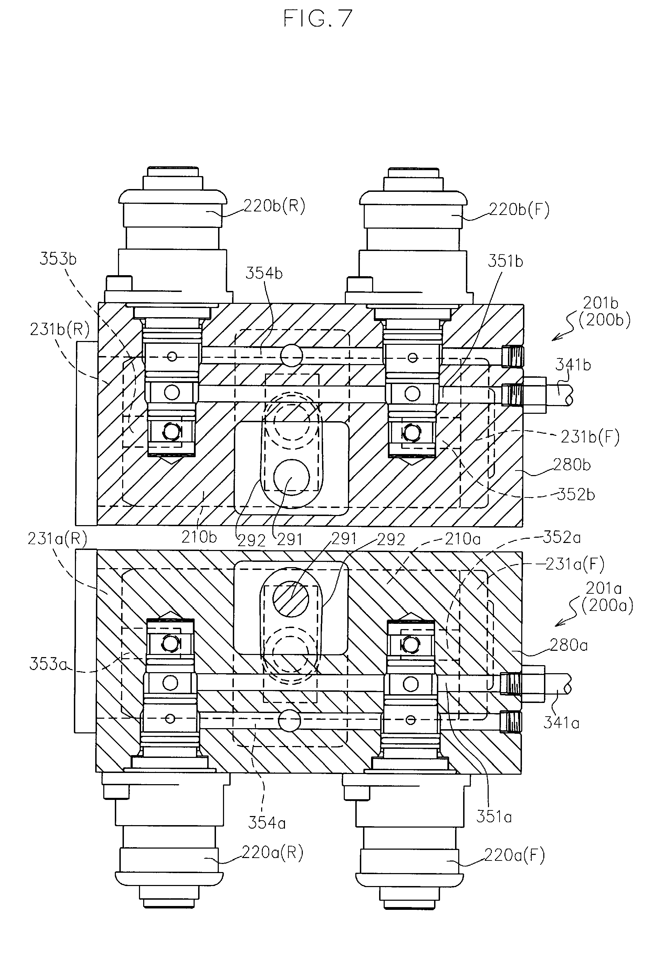

FIG. 7 shows a sectional view of the first and second actuators 200a, 200b taken in line VII-VII in FIG. 6.

As shown in FIGS. 3 and 5 to 7, the hydraulic pump unit 100A includes first and second hydraulic servomechanisms 201a, 201b as the first and second actuators 200a, 200b.

The first and second hydraulic servomechanisms 201 a, 201 b respectively have servo pistons 210a, 210b reciprocatingly accommodated in the piston accommodating chambers in a state where the servo pistons 210a, 210b are operatively connected to the corresponding capacity adjusting mechanisms 130a, 130b, a servo supply/discharge oil passage for supplying operating oil to and discharging it from the servo pistons 210a, 210b, and electromagnetic valves 220a, 220b for switching the servo supply/discharge oil passage.

In the present embodiment, the piston accommodating chambers are defined by servo piston cases 230a, 203b removably connected to the pump case 120, and the electromagnetic valves 220a, 220b are mounted in port plates 280a, 280b connected to the corresponding servo piston cases 230a, 230b.

Specifically, as shown in FIGS. 5 to 7, the first hydraulic servomechanism 201 a is provided with a first servo piston case 230a removably connected to the pump case 120, a first servo piston 210a accommodated in a first piston accommodating chamber defined by the first servo piston case 230a, a first servo supply/discharge oil passage for supplying operating oil to and discharging it from the first servo piston 210a, and an electromagnetic valve for a first regular rotation oil chamber 220a(F) and an electromagnetic valve for a first reverse rotation oil chamber 220a(R), the electromagnetic valves being configured to switch the first servo supply/discharge oil passage.

The second hydraulic servomechanism 201b has substantially the same constitution as that of the first hydraulic servomechanism 201a.

The corresponding members in the figures are, therefore, designated by the same numerals or the same numerals with replacing subscripts with b, and the detailed description thereof are omitted.

The first servo piston 210a is reciprocatingly accommodated in the first piston accommodating chamber so as to define a first regular rotation oil chamber 231a (F) and a first reverse rotation oil chamber 231a (R).

That is, the first piston accommodating chamber has the first regular rotation oil chamber 231a (F) and the first reverse rotation oil chamber 231a (R) respectively provided at one side and the other side of the axis line direction of the servo piston 210a so as to sandwich the first servo piston 210a.

The first servo piston 210a is operatively connected to the tip end of the corresponding control shaft 132 in a state where the first servo piston 210a is accommodated in the first piston accommodating chamber in a reciprocating manner.

In the present embodiment, as shown in FIGS. 6 and 7, the first servo piston 210a is operatively connected to the tip end of the control shaft 132 via a first crank arm 240a.

The first servo piston case 230a is configured so that the axis line direction of the first servo piston 210a is parallel to the pump shaft 150a.

Alternatively, the first servo piston case 230a may be configured so that the axis line direction of the first servo piston 210a is perpendicular to the pump shaft 150a.

The first crank arm 240a has a base end portion connected to the corresponding control shaft 132 in a relatively non-rotatable manner around the axis of the control shaft 132, an arm portion extending outward in the radial direction from the base end portion on the basis of the axis line of the corresponding control shaft 132, and an engaging portion extending in the axis line direction of the corresponding control shaft 132 from the free end side of the arm portion.

The engaging portion of the first crank arm 240a is engaged with the outer peripheral surface of the first servo piston 210a via an access opening 231 formed on the first servo piston case 230a.

For details, an engaging groove 211 is formed in the direction orthogonal to the axis line of the first servo piston 210a on the outer peripheral surface of the first servo piston 210a, and the engaging portion of the first crank arm 240a is engaged into the engaging groove 211.

According to the constitution, when the first servo piston 210a is pushed toward the regular rotation direction of one side of the axis line direction, the engaging portion of the first crank arm 240a engaged into the engaging groove 211 is oscillated to one side around the corresponding control shaft 132, and thereby the control shaft 132 is rotated to the regular rotation direction around the axis line.

Similarly, when the first servo piston 210a is pushed toward the reverse rotation direction of the other side of the axis line direction, the engaging portion of the first crank arm 240a engaged into the engaging groove 211 is oscillated to the other side around the corresponding control shaft 132, and thereby the control shaft 132 is rotated to the reverse rotation direction around the axis line.

In the figures, numeral 245 designates a roller externally inserted onto the engaging portion of the first crank arm 240a, and numeral 215 designates a pair of neutral returning springs for keeping the first servo piston 210a at a neutral position when oil pressure is not applied to the first servo piston 210a.

As shown in FIGS. 3, 5 and 7, the supply/discharge oil passage has a first servo input passage 351a having a first end fluid-connected to a hydraulic pressure source (a charge pump body 410, which is described later, in the present invention), a first regular rotation passage 352a having a first end fluid-connected to the first regular rotation oil chamber 231a(F), a first reverse rotation passage 353a having a first end fluid-connected to the first reverse rotation oil chamber 231a (R), and a first servo drain passage 354a having a first end fluid-connected to an oil tank (the internal space of the pump case 120 in the present invention).

The first regular rotation oil chamber side electromagnetic valve 220a (F) is configured so as to selectively take a neutral position where the first regular rotation passage 352a is blocked, a regular rotation position where the first servo input passage 351 a is fluid-connected to the first regular rotation passage 352a, and a reverse rotation position where the first servo drain passage 354a is fluid-connected to the first regular rotation passage 352a, according to a control signal to be described later.

Similarly, the first reverse rotation oil chamber side electromagnetic valve 220a (R) is also configured so as to selectively take a neutral position where the first reverse rotation passage 353a is blocked, a regular rotation position where the first servo drain passage 354a is fluid-connected to the first reverse rotation passage 353a, and a reverse rotation position where the first servo input passage 351a is fluid-connected to the first reverse rotation passage 353a, according to a control signal to be described later.

With the construction, when both the first regular rotation oil chamber side electromagnetic valve 220a (F) and the first reverse rotation oil chamber side electromagnetic valve 220a (R) are positioned at "the neutral position", "the regular rotation position" and "the reverse rotation position", the first servo piston 210a is held at the neutral position, moved to the regular rotational direction, and moved to the reverse rotational direction, respectively.

In the present embodiment, the first and second hydraulic servomechanisms 201a and 201b also have manual operation mechanisms 290 for manually operating the corresponding capacity adjusting mechanisms 130a and 130b.

The manual operation mechanism 290 is provided for tilting the corresponding capacity adjusting mechanisms 130a and 130b by the manual operation when the operation oil cannot be supplied to the first and second hydraulic servomechanisms 201a and 201 b by some reasons.

Specifically, as shown in FIGS. 5 to 7, the manual operation mechanism 290 is provided with a manual operation shaft 291 supported in a rotatable manner around its axis, a connecting member 292 having a base end connected to the manual operation shaft 291 in a relatively non-rotatable manner and a free end operatively connected to the corresponding servo pistons 210a and 210b, and a manual operation arm 293 having a base end connected to the manual operation shaft in a relatively non-rotatable manner. The manual operation mechanism 290 is configured so that the corresponding capacity adjusting mechanisms 130a and 130b can be tilted via the corresponding servo pistons 210a and 210b by oscillating the manual operation arm 293 around the manual operation shaft 291.

In addition to the constitution, the hydraulic pump unit 100A may be provided with at least a charge pump unit 400 rotated and driven by the first or second pump shafts 150a, 150b.

In the present embodiment, as shown in FIGS. 4, 5, the hydraulic pump unit 100A is provided with a single charge pump body 410 rotated and driven by the first pump shaft 150a, and a charge pump case 420 connected to the port block 180 so as to surround the charge pump body 410.

Herein, a hydraulic circuit in the working vehicle 1 according to the present embodiment will be described.

As shown in FIG. 3, the working vehicle 1 is provided with the pair of first operation oil lines 300a for fluid-connecting the first hydraulic pump body 110a and the first hydraulic motor body 22a, the pair of second operation oil lines 300b for fluid-connecting the second hydraulic pump body 110b and the second hydraulic motor body 22b, a suction line 310 having a first end fluid-connected to an oil tank 16 and a second end fluid-connected to the suction side of the charge pump body 410, a discharge line 320 having a first end fluid-connected to the discharge side of the charge pump body 410, a charge line 330 having a first end fluid-connected to the discharge line 320 and second ends fluid-connected to the pair of first operation oil lines 300a and the pair of second operation oil lines 300b via check valves 335, respectively, a servo input line 340 having a first end fluid-connected to the discharge line 320 and second ends fluid-connected to the first and second hydraulic servomechanisms 201a, 201b, a first servo drain line 360a having a first end fluid-connected to the first hydraulic servomechanism 201 a and a second end fluid-connected to an oil reservoir (in the present embodiment, the interior space of the pump case 120), and a second servo drain line 360b having a first end fluid-connected to the second hydraulic servomechanism 201b and a second end fluid-connected to the oil reservoir (in the present embodiment, the interior space of the pump case 120).

The pair of first operation oil lines 300a includes a pair of first operation passages 301 a formed in the port block 180 so as to have first ends respectively fluid-connected via a pair of kidney ports to the first hydraulic pump body 110a and second ends opened to the outer surface to form a pair of first operation oil ports 301a (P), and a pair of first conduits 302a extending between the pair first operation oil ports 301a (P) and the first hydraulic motor unit 20a.

The pair of first operation oil lines 300b includes a pair of second operation passages 301b formed in the port block 180 so as to have first ends respectively fluid-connected via a pair of kidney ports to the second hydraulic pump body 110b and second ends opened to the outer surface to form a pair of second operation oil ports 301b (P), and a pair of second conduits 302b extending between the pair second operation oil ports 301 b (P) and the second hydraulic motor unit 20b.

The suction line 310 includes a suction conduit 311 which has a first end fluid-connected to the oil tank 16 and in which a filter 315 is interposed, and a suction passage 312 formed in the charge pump case 420.

The suction passage 312 has a first end forming a suction port 312 (P) to which the suction conduit 311 is connected and a second end fluid-connected to the suction side of the charge pump body 410.

The discharge line 320 has a discharge passage 321 (see FIG. 5) formed in the charge pump case 420 so as to have a first end fluid-connected to the discharge side of the charge pump body 410.

The discharge passage 321 has a discharge port 322 (P) for charge opened to an abutting surface with the port block 180 and a discharge port 323 (P) for servo opened to the outer surface.

The charge line 330 has a charge passage 331 formed in the port block 180 so as to have a first end forming a charge port 331 (P) fluid-connected to the discharge port 322 (P) for charge and second ends respectively fluid-connected to the pair of first operation passages 301a and the pair of second operation passages 301b via the check valves 335.

The servo input line 340 has a first servo conduit 341a having a first end fluid-connected to the servo discharge port 323 (P) and a second end fluid-connected to the first servo input passage 351 a, the first servo input passage 351a, a second servo conduit 341b having a first end fluid-connected to the servo discharge port 323 (P) and a second end fluid-connected to a second servo input passage 351b, and the second servo input passage 35 1b.

The first servo drain line 360a has the first servo drain passage 354a formed in the first port plate 280a, the first servo piston case 230a and the pump case 120.

Similarly, the second servo drain line 360b has the second servo drain passage 354b formed in the second port plate 280b, the second servo piston case 230b and the pump case 120.

As shown in FIG. 3, the working vehicle 1 according to the present embodiment further includes a first bypass line 370a which communicates between the pair of first operation oil lines 300a and in which a bypass valve 375 for communicating/blockading the first bypass line 370a is interposed, a second bypass line 370b which communicates between the pair of second operation oil lines 300b and in which a bypass valve 375 for communicating/blockading the second bypass line 370b is interposed, a self-suction line 380 for self-sucking oil from the oil reservoir (the interior space of the housing 120) to either one of the pair of first operation oil lines 300a or either one of the pair of second operation oil lines 300b having become the negative pressure at the time of stopping the charge pump body 410, and a hydraulic pressure setting line 390 for setting the hydraulic pressure of the discharge line 320.

In the self-priming line 380, a check valve 385 is interposed so as to allow the oil to flow from the oil reservoir to the negative pressure line of the pair of first operation oil lines 300a or the negative pressure line of the pair of second operation oil lines 300b and prevent the reverse flow.

A relief valve 395 is interposed in the hydraulic pressure setting line 390.

Herein, the control method of the first regular rotation oil chamber side electromagnetic valve 220a(F) and the first reverse rotation oil chamber side electromagnetic valve 220a(R), and the second regular rotation oil chamber side electromagnetic valve 220b(F) and the second reverse rotation oil chamber side electromagnetic valve 220b(R) will be explained.

Each of the electromagnetic valves 220a and 220b is operatively controlled by the manual operation signal based on the amount of operation of the travel operation mechanism 10.

As shown in FIG. 2, in the present embodiment, the working vehicle 1 is provided with a first and second operation members 50L and 50R for independently operating the first capacity adjusting mechanism 130a and the second capacity adjusting mechanism 130b respectively, as the travel operation mechanism 10.

The first regular rotation oil chamber side electromagnetic valve 220a (F) and the first reverse rotation oil chamber side electromagnetic valve 220a (R) are operatively controlled based on the manual operation signal corresponding to the operation amount including the operation direction of the first operation member 50L. The second regular rotation oil chamber side electromagnetic valve 220b (F) and the second reverse rotation oil chamber side electromagnetic valve 220b (R) are operatively controlled based on the manual operation signal corresponding to the amount of operation including the operation direction of the second operation member 50R.

Numeral 12 shown in FIG. 2 designates a meter panel for displaying the travel speed of the vehicle and the vehicle posture relating to the pitching or rolling when traveling on a sloping ground.

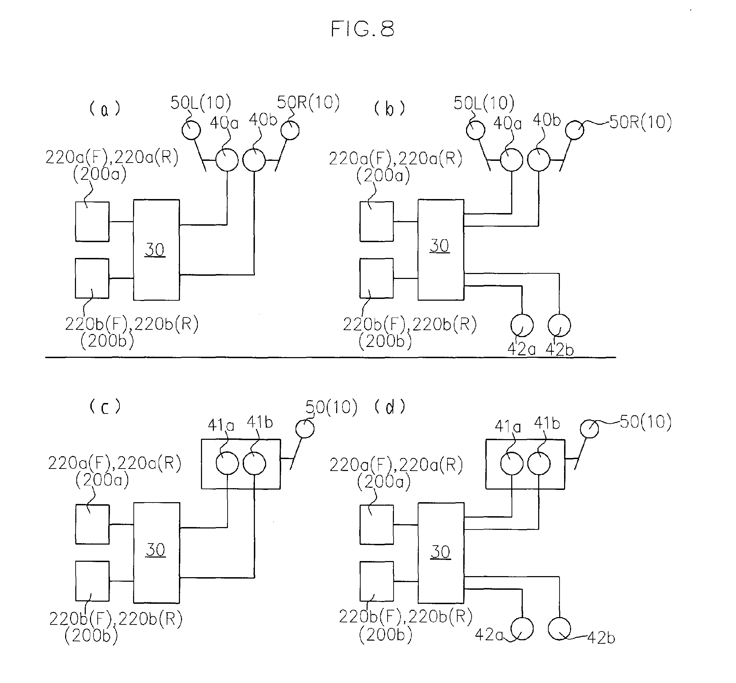

FIG. 8 (a) shows a schematic control diagram of the electromagnetic valves 220a and 220b in the working vehicle 1.

Specifically, as shown in FIG. 8 (a), the working vehicle 1 is provided with a control part 30, a first manual operation amount sensor 40a for detecting the manual operation amount of the first operation member 50L, and a second manual operation amount sensor 40b for detecting the manual operation amount of the second operation member 50R. The control part 30 outputs the manual operation signal corresponding to the detecting signal from the first and second manual operation amount sensors 40a and 40b to the electromagnetic valves 220a and 220b.

As described above, the hydraulic pump unit 100A according to the present embodiment is configured so as to operate the first and second capacity adjusting mechanisms 130a and 130b by utilizing the first and second actuators 200a, 200b (the first and second hydraulic servomechanism 201a, 201b).

Therefore, the manual operation power and the manual operation amount for operating the first and second capacity adjusting mechanisms 130a, 130b can be reduced.

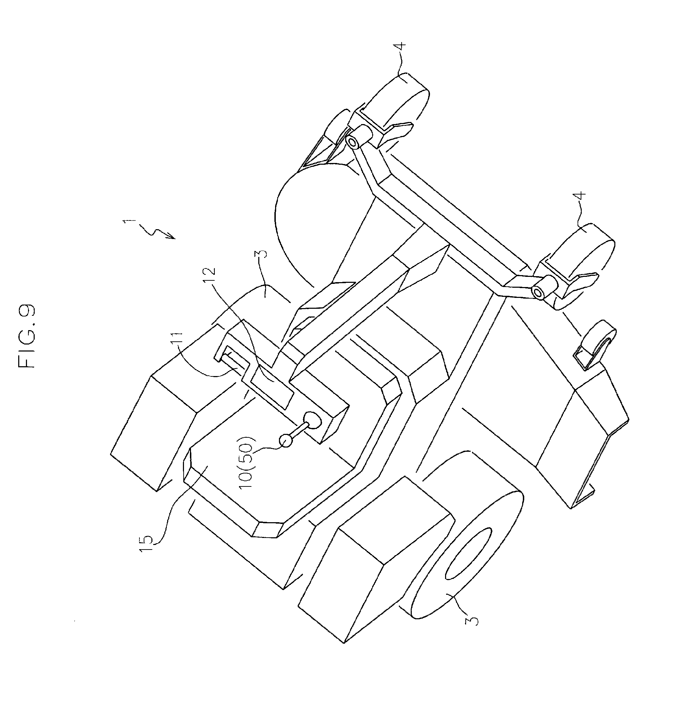

In the present embodiment, the working vehicle 1 uses the first and second operation members 50L, 50R that are independent to each other and are arranged on the steering post in front of the driver seat as the travel operation mechanism 10. Alternatively, a single operation member 50 (See FIG. 9) arranged on the steering post may be used as the travel operation mechanism 10.

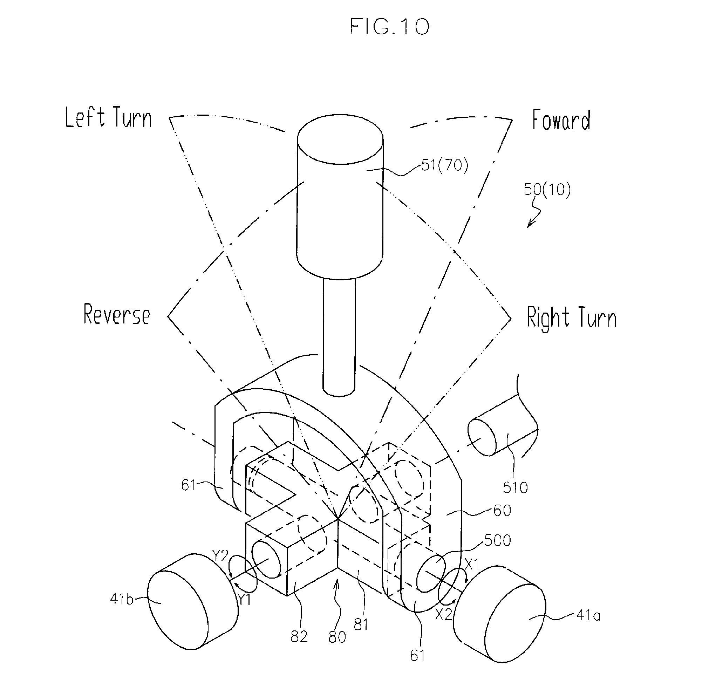

FIG. 10 (a) shows the perspective view of the single operation member 50.

The operation member 50 is so configured to be oscillated around both a traveling referential shaft 500 and a steering referential shaft 510, which are orthogonal to each other, based on the operation of a single operation portion 51.

In the modified embodiment provided with the operation member 50, the electromagnetic valves 220a and 220b are operatively controlled based on the amount of operation (including the operation direction) around the travel referential shaft 500 and the amount of operation (including the operation direction) around the steering referential shaft 510.

Specifically, the operation member 50 is provided with a bifurcated body member 60 having a pair of bearing portions 61, a grip member 70 connected to the body member 60 and forming the operation portion 51, and a cruciform joint member 80 connected to the body member 60 in a relatively rotatable manner via the travel referential shaft 500.

The cruciform joint member 80 has a forward/reverse shaft portion 81 supported in a rotatable manner around its axis by the pair of bearing portions 61 via the traveling referential shaft 500, and a steering shaft portion 82 extending in a direction orthogonal to the forward/reverse shaft portion 81.

As described above, the forward/reverse shaft portion 81 is supported in a rotatable manner around its axis by the body member 60 via the traveling referential shaft 500.

The steering shaft portion 82 has a bearing hole formed therein, and is supported in a rotatable manner around its axis by the steering referential shaft 510 provided on the vehicle frame via the bearing hole.

In the modified embodiment provided with the operation member 50, as shown in FIGS. 8(c) and 10, a speed amount detecting sensor 41 a for detecting the amount of operation around the travel referential shaft 500 and a steering amount detecting sensor 41b for detecting the amount of operation around the steering referential shaft 510 are provided instead of the first manual operation amount sensor 40a and the second manual operation amount sensor 40b.

The control part 30 operatively controls the electromagnetic valves 220a and 220b so that the first and second capacity adjusting mechanisms 130a and 130b are tilted in the same direction by the amount corresponding to the detecting signal of the speed amount detecting sensor 41a, and operatively controls the electromagnetic valves 220a and 220b so that the first and second capacity adjusting mechanisms 130a and 130b are tilted in the opposite direction by the amount corresponding to the detecting signal of the steering amount detecting sensor 41 b.

More specifically, when the control part 30 detects the oscillation of the operation member 50 to one side (X1 direction in FIG. 10) around the travel referential shaft 500 based on the detecting signal from the speed amount detecting sensor 41a, the control part 30 operatively controls the electromagnetic valves 220a and 220b so that both the first and second capacity adjusting mechanisms 130a and 130b are tilted in the forward direction by the same amount corresponding to the detecting signal.

Similarly, when the control part 30 detects the oscillation of the operation member 50 to the other side (X2 direction in FIG. 10) around the travel referential shaft 500 based on the detecting signal from the speed amount detecting sensor 41a, the control part 30 operatively controls the electromagnetic valves 220a and 220b so that both the first and second capacity adjusting mechanisms 130a and 130b are tilted in the reverse direction by the same amount corresponding to the detecting signal.

By contrast, when the control part 30 detects the oscillation of the operation member 50 to one side (Y1 direction in FIG. 10) around the steering referential shaft 510 based on the detecting signal from the steering amount detecting sensor 41 b, the control part 30 operatively controls the electromagnetic valves 220a and 220b so that the first capacity adjusting mechanism 130a is tilted in the forward direction and the second capacity adjusting mechanism 130b is tilted in the reverse direction by the amount corresponding to the detecting signal.

Similarly, when the control part 30 detects the oscillation of the operation member 50 to the other side (Y2 direction in FIG. 10) around the steering referential shaft 510 based on the detecting signal from the steering amount detecting sensor 41 b, the control part 30 operatively controls the electromagnetic valves 220a and 220b so that the first capacity adjusting mechanism 130a is tilted in the reverse direction and the second capacity adjusting mechanism 130b is tilted in the forward direction by the amount corresponding to the detecting signal.

That is, the operation member 50 can be operated within an operable region defined by a first zero turn position TRmax where the operation member 50 is maximumly oscillated to one side about the steering referential shaft 510 at the neutral position around the traveling referential shaft 500, a second zero turn position TLmax where the operation member 50 is maximumly oscillated to the other side around the steering referential shaft 510 at the neutral position around the traveling referential shaft 500, a forward maximum output position Fmax where the operation member 50 is maximumly oscillated to one side around the traveling referential shaft 500 at the neutral position around the steering referential shaft 510, and a reverse maximum output position Rmax where the operation member 50 is maximumly oscillated to the other side around the traveling referential shaft 500 at the neutral position of the steering referential shaft 510.

When the current operation position within the operable region of the operation member 50 is detected by the speed amount detecting sensor 41 a and the steering amount sensor 41b, the control part 30 sends the output signal corresponding to the detecting signal to the electromagnetic valves 220a and 220b.

In the vehicle provided with the single operation member 50, the driver grips the operation member 50 only by one hand with the other hand being free. Thereby, the posture of the driver at the time of operation is hardly stabilized.

In view of this point, the handrail 11 may be preferably provided on the steering post in front of the driver seat 15, as shown in FIG. 9.

As shown in FIGS. 8(b) and 8(d), the electromagnetic valves 220a and 220b may be preferably controlled based on feedback signals corresponding to the output amounts of the first and second hydraulic motor units 20a and 20b in addition to the manual operation signal.

Specifically, the working vehicle 1 may be provided with first and second output sensors 42a and 42b for respectively detecting the rotational amounts (including the rotational direction) of the first and second motor shafts 21 a and 21b.

The electromagnetic valves 220a and 220b may be operatively controlled by the feedback signal from the first and second output sensors 42a and 42b, in addition to the manual operation signal based on the first and second manual operation amount sensors 40a and 40b or the manual operation signal based on the speed amount detecting sensor 41 a and the steering amount detecting sensor 41 b.

With the thus constructed feedback circuit, the relationship between the amount of operation of the travel operation mechanism 10 and the output amounts of the hydraulic motor units 20a and 20b can be maintained to be constant in spite of the load fluctuation to the hydraulic motor units 20a and 20b.

Specifically, the load to the first and second hydraulic motor units 20a and 20b is fluctuated according to travel conditions such as a state of a travel surface and the existence of pulling.

That is, even when the amount of operation of the travel operation mechanism 10 is constant, for example, the actual travel speed of the working vehicle 1 in a state of traveling on an upward inclined ground is different from that of the working vehicle 1 in a state of traveling on a downward inclined ground.

By contrast, the provision of the feedback circuit allows the output amounts of the first and second hydraulic motor units 20a and 20b to follow the amount of operation of the travel operation mechanism 10.

In the present embodiment, as described above, the first and second hydraulic servomechanisms 200a, 200b have the servo piston cases (first and second servo piston cases 230a, 230b) for exclusive use, respectively. However, instead of the servo piston cases, the first and second hydraulic servomechanisms 200a, 200b can be provided with a single servo piston case 230.

### Embodiment 2

Hereinafter, another embodiment of the hydraulic pump unit according to the present invention will be described referring to the accompanying drawings.

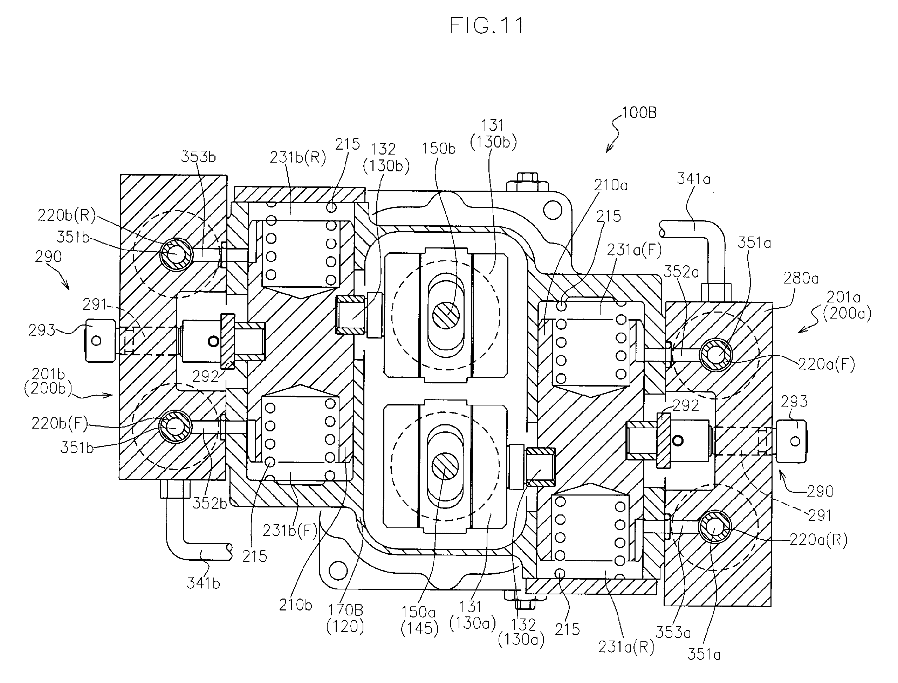

FIG. 11 shows a sectional view taken in a line orthogonal to pump shafts of a hydraulic pump unit 100B according to the present embodiment.

As shown in FIG. 11, the hydraulic pump unit 100B according to the present embodiment is different from the hydraulic pump unit 100A mainly in that the piston accommodating chamber is provided in a wall portion of a pump case.

Therefore, the same members as the embodiment 1 in the figures are designated by the same numerals, and the detailed description thereof are omitted.

Specifically, the hydraulic pump unit 100B according to the present embodiment has a case body 170B instead of the case body 170 in the hydraulic pump unit 100A.

As shown in FIG. 11, the case body 170B is constituted so that the peripheral wall defines the first and second piston accommodating chambers.

In the present embodiment, the first and second piston accommodating chambers are defined so that the axis line directions of the first and second servo pistons 210a, 210b are orthogonal to the pump shafts 150a, 150b. Therefore, so as to prevent the interference of the first and second piston accommodating chambers, the first and second piston accommodating chambers are positioned so as to face each other across the first and second hydraulic pump bodies 110a, 110b.

In the configuration where the axis line direction of the servo piston is orthogonal to the first and second pump shafts 150a, 150b, the first and second control shafts may be directly engaged with the first and second servo pistons, respectively.

According to the hydraulic pump unit 100B, the same effect as that of the embodiment 1 can be obtained.

### Embodiment 3

Hereinafter, still another embodiment of the hydraulic pump unit according to the present invention will be described referring to the accompanying drawings.

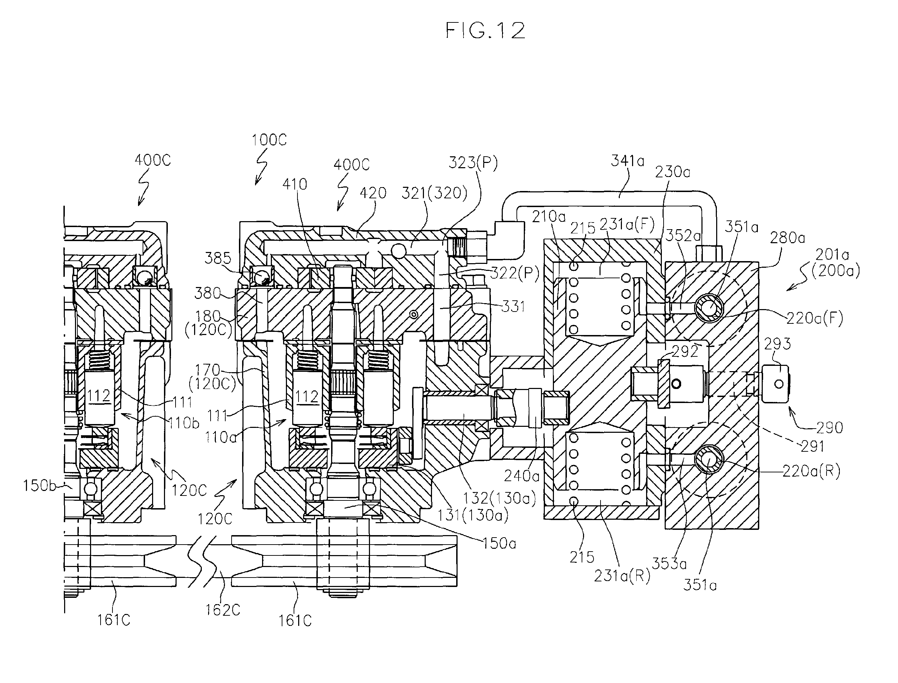

FIG. 12 shows a longitudinal sectional view taken in a line along pump shafts of the hydraulic pump unit 100C according to the present embodiment.

The same members as those of the embodiment 1 or 2 are designated by the same numerals, and the detailed description thereof are omitted.

As shown in FIG. 12, the hydraulic pump unit 100C according to the present embodiment is provided with pump cases which respectively correspond to the first and second hydraulic pump bodies 110a, 110b.

That is, the hydraulic pump unit 100C is provided with a pair of pump cases 120C for respectively accommodating the first hydraulic pump body 110a and the second hydraulic pump body 110b. The pair of pump cases 120C are arranged in parallel.

The hydraulic pump unit 100C may be provided with a pair of pulleys 161C respectively supported by the first and second pump shafts 150a, 150b, and a belt 162C wound between the pulleys 161C to which tension is applied, as the power transmission mechanism 160.

As shown in FIG. 12, the hydraulic pump unit 100C according to the present embodiment has a pair of charge pump units 400C respectively driven by the first pump shaft 150a and the second pump shaft 150b. The pair of charge pump units 400C respectively supply the operation oil to the first and second hydraulic servomechanisms 200a, 200b. Alternatively, as in the embodiments 1 and 2, only the single charge pump unit 400C may be provided in the hydraulic pump unit 100C. In the alternative configuration, the operation oil is supplied to the both the first and second hydraulic servomechanisms 200a, 200b from the single charge pump unit 400C.

Though the piston accommodating chamber is defined by the servo piston case which is a separate body from the pump case 120C as shown in FIG. 12 in the present embodiment, it is possible that the piston accommodating chamber is formed by the peripheral wall of the corresponding pump case 120C instead of the servo piston case, as in the second embodiment.

### Embodiment 4

Hereinafter, still another embodiment of the hydraulic pump unit according to the present invention will be described referring to the accompanying drawings.

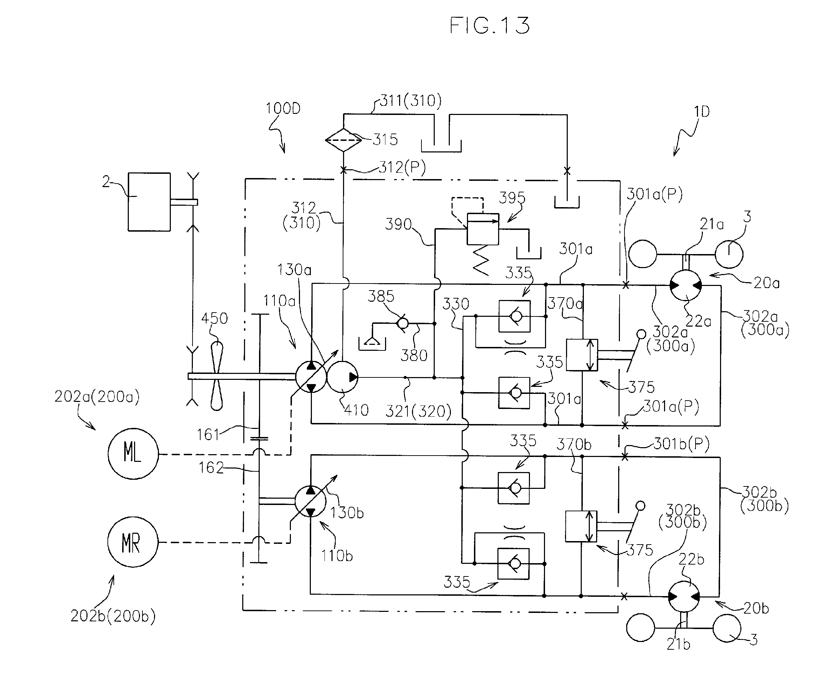

FIG. 13 shows a hydraulic circuit diagram of a working vehicle ID to which a hydraulic pump unit 100D according to the present embodiment is applied.

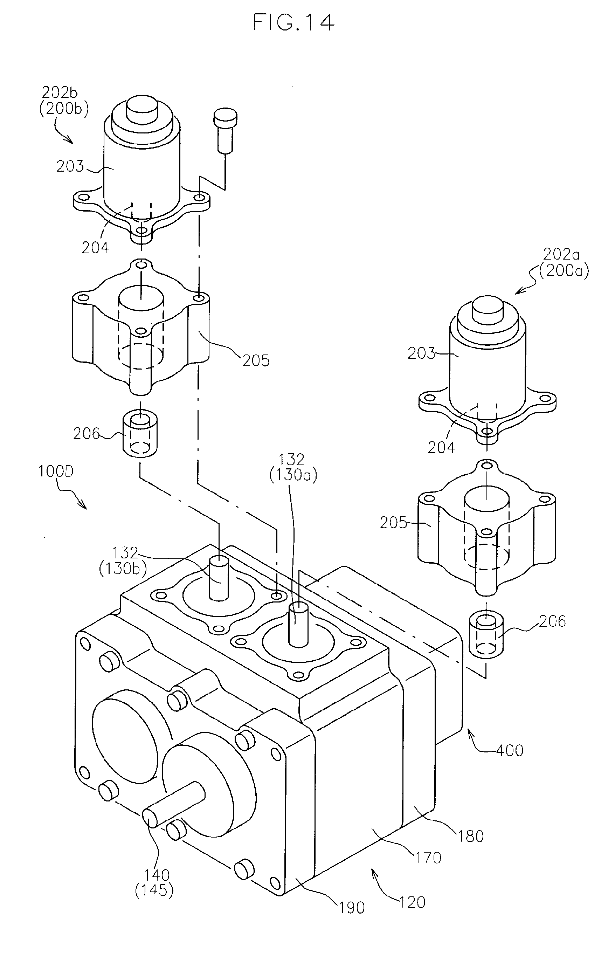

FIG. 14 shows an exploded perspective view of the hydraulic pump unit 100D.

The same members as those of the embodiments 1 to 3 are designated by the same numerals, and the detailed description thereof are omitted.

As shown in FIGS. 13 and 14, the hydraulic pump unit 100D according to the present embodiment is provided with the first and second electric motors (first and second servomotors) 202a and 202b instead of the first and second hydraulic servomechanisms 201 a and 201b, as the first and second actuators 200a and 200b.

That is, the hydraulic pump unit 100D is configured so that the control part 30 operatively controls the first and second electric motors 202a and 202b based on the manual operation signal corresponding to the manual operation amount of the travel operation mechanism 10, or the manual operation signal and the feedback signal.

In the present embodiment, the first and second electric motors 202a and 202b are configured so that each output shafts 204 is coaxially with the corresponding control shaft 132 and is connected in a relatively non-rotatable manner around the axis to the corresponding control shaft 132.

Specifically, each of the first and second electric motors 202a and 202b has a motor case 203 in which a motor body is accommodated, and an output shaft 204 projected from the motor case 203.

The motor case 203 is connected to the pump case 120 via a spacer 205 in which a through-hole allowing the connection of the output shaft 204 and the control shaft 132 is formed.

The output shaft 204 is connected to the corresponding control shaft 132 via a coupling 206 in a relatively non-rotatable manner within the through-hole.

Although the spacer 205 is a separate body from the electric motor 202 and the pump case 120 in the present invention, it is of course that the spacer 205 can be also integrally formed with the electric motor 202 or the pump case 120.

### Embodiment 5

Hereinafter, still another embodiment of the hydraulic pump unit according to the present invention will be described referring to the accompanying drawings.

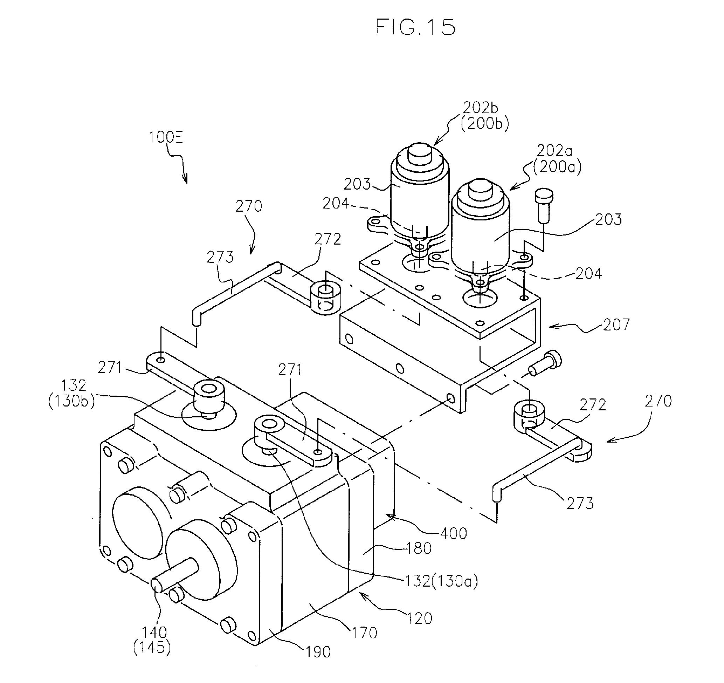

FIG. 15 shows an exploded perspective view of a hydraulic pump unit 100E according to the present embodiment.

The same members as those of the embodiments 1 to 4 are designated by the same numerals, and the detailed description thereof are omitted.

The hydraulic pump unit 100E according to the present invention is different from the hydraulic pump unit 100D according to the embodiment 4 in that the first and second electric motors 202a and 202b are connected to the corresponding control shafts 132 via link mechanisms 270.

In the hydraulic pump unit 100E, the first and second electric motors 202a and 202b are connected to the control shaft 132 via the link mechanisms 270, and thereby the capacities of the first and second electric motors 202a and 202b can be reduced.

In the present embodiment, the link mechanism 270 is provided with a control arm 271 connected to the control shaft 132 in a relatively non-rotatable manner, a motor side arm 272 connected to the output shaft 204 in a relatively non-rotatable manner, and a link member 273 for connecting the control arm 271 and the motor side arm 272.

In the present embodiment, as shown in FIG. 15, the first and second electric motors 202a and 202b are connected to the pump case 120 via a mounting frame 207. However, the first and second electric motors 202a and 202b can be connected to the vehicle frame 8 via a proper mounting frame instead of this configuration.

### Embodiment 6

Hereinafter, still another embodiment of the hydraulic pump unit according to the present invention will be described referring to the accompanying drawings.

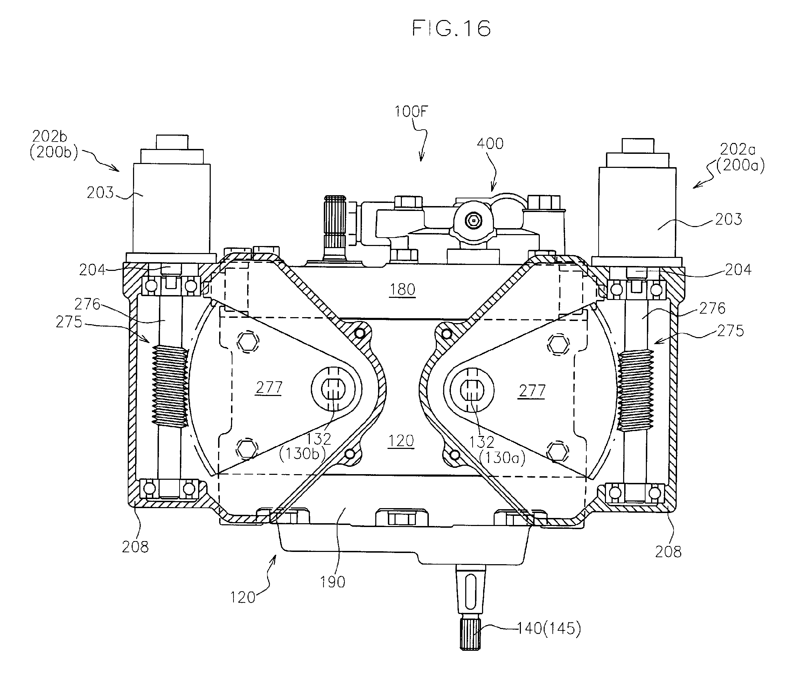

FIG. 16 shows a sectional view of a hydraulic pump unit 100F according to the present embodiment.

The same members as those of the embodiments 1 to 5 are designated by the same numerals, and the detailed description thereof are omitted.

The hydraulic pump unit 100F according to the present embodiment is different from the hydraulic pump unit 100D according to the embodiment 4 in that the first and second electric motors 202a and 202b are connected to the corresponding control shafts 132 via reduction gear mechanisms 275.

In the hydraulic pump unit 100F, the first and second electric motors 202a and 202b are connected to the control shaft 132 via the reduction gear mechanisms 275, and thereby the capacities of the first and second electric motors 202a and 202b can be reduced.

In the present embodiment, the reduction gear mechanism 275 is provided with a worm gear 276 operatively connected to the output shaft 204, and an arm member 277 which connected to the control shaft 132 and in which a gear engaged with the worm gear 276 is arranged in circular arc shape. With this configuration, the reduction gear mechanisms 275 can be made compact, while obtaining a predetermined reduction ratio.

The numeral 208 in FIG. 16 designates a mounting frame for supporting the motor case 203 of the electric motors 202a and 202b, and the worm gear 276 is supported by the mounting frame 208.

### Embodiment 7

Hereinafter, still another embodiment of the hydraulic pump unit according to the present invention will be described referring to the accompanying drawings.

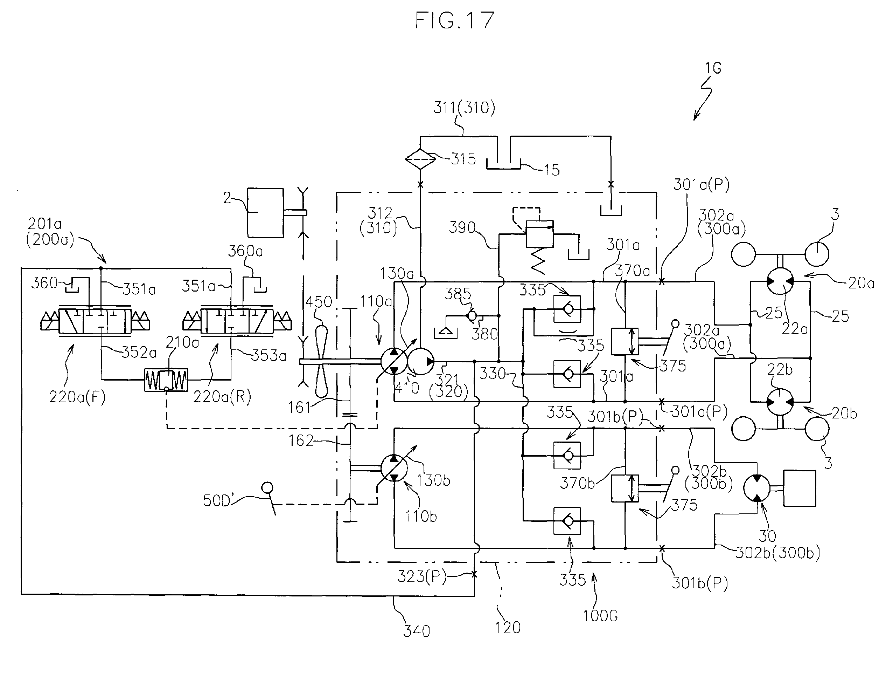

FIG. 17 shows a hydraulic circuit diagram of a working vehicle 1G to which a hydraulic pump unit 100G according to the present embodiment is applied.

The same members as those of the embodiments 1 to 6 are designated by the same numerals, and the detailed description thereof are omitted.

As shown in FIG. 17, the hydraulic pump unit 100G according to the present embodiment is configured so as to use the first hydraulic pump body 110a as a traveling hydraulic pump body for hydraulically driving both the pair hydraulic motor bodies 22 a, 22b, and use the second hydraulic pump body 110b as a hydraulic source for another hydraulic actuator 30 other than the first and second hydraulic motor units 20a, 20b.

For details, in the present embodiment, the first and second hydraulic motor units 20a, 20b are fluid-connected with each other via a pair of hydraulic motor lines 25 so as to form a closed circuit.

The first hydraulic pump body 110a is fluid-connected to the pair of hydraulic motor lines 25 via the pair of first operation oil lines 300a.

Specifically, the hydraulic pump unit 100G according to the present embodiment is provided with the first and second hydraulic pump bodies 110a, 110b, the pump case 120 for accommodating the first and second hydraulic pump bodies 110a, 110b, the first and second capacity adjusting mechanisms 130a, 130b for respectively changing the suction/discharge amounts of the first and second hydraulic pump bodies 110a, 110b, and the first hydraulic servomechanism 201a for operating the first capacity adjusting mechanism 130a based on the manual operation signal corresponding to the manual operation amount of the travel operation mechanism 10, or both of the manual operation signal and the feedback signal.

In the present embodiment, as shown in FIG. 17, the second capacity adjusting mechanism 130b is operated by the manual operation power via another control lever 50D' without utilizing the hydraulic force.

In the hydraulic pump unit 100G, the manual operation power and the manual operation amount for operating the travel operation mechanism 10 can be reduced.

Although the present embodiment is explained with taking an example of the case where the first hydraulic servomechanism 201a is utilized as the first actuator 200a for operating the first capacity adjusting mechanism 130a, it is of course that the first electric motor 202a could be utilized as the first actuator 200a.

This specification is by no means intended to restrict the present invention to the preferred embodiments set forth therein. Various modifications to the hydraulic pump unit may be made by those skilled in the art without departing from the spirit and scope of the present invention as defined in the appended claims.

## Claims

1. A hydraulic pump unit of variable displacement type disposed away from a pair of hydraulic motor units which are capable of being independently arranged, the pump unit fluid-connected to the pair of hydraulic motor units so as to change the outputs of the pair of hydraulic motor units in both forward and reverse rotation directions, comprising:
a hydraulic pump body operatively rotated and driven by a driving source,
a pump case surrounding the hydraulic pump body,
a capacity adjusting mechanism for changing the capacity of the hydraulic pump body, and
an actuator for operating the capacity adjusting mechanism, wherein the actuator is controlled based on a manual operation signal corresponding to a manual operation amount.

2. The hydraulic pump unit according to claim 1, wherein the actuator is controlled based on a feedback signal corresponding to outputs of the pair of the hydraulic motor units, in addition to the manual operation signal.

3. The hydraulic pump unit according to claim 1 or 2, wherein the hydraulic pump body includes first and second hydraulic pump bodies respectively and independently fluid-connected to the pair of hydraulic motor units;
the capacity adjusting mechanism includes first and second capacity adjusting mechanisms respectively corresponding to the first and second hydraulic pump bodies; and
the actuator includes first and second actuators respectively corresponding to the first and second capacity adjusting mechanisms.

4. The hydraulic pump unit according to claim 1 or 2, wherein the pair of hydraulic motor units are fluid-connected to each other so as to form a closed circuit; and
the hydraulic pump body includes a single hydraulic pump body for traveling fluid-connected to the closed circuit, and a hydraulic pump body fluid-connected to the other hydraulic actuator other than the pair of hydraulic motor units.

5. The hydraulic pump unit according to any one of claims 1 to 4, wherein the actuator is a hydraulic servomechanism that includes a servo piston operatively connected to the capacity adjusting mechanism and accommodated in a reciprocating manner within a piston accommodating chamber so as to divide the piston accommodating chamber into a regular rotation oil chamber and a reverse rotation oil chamber, a supply/discharge oil passage for supplying operating oil to and discharging it from the servo piston, and an electromagnetic valve for switching the supply/ discharge oil passage.

6. The hydraulic pump unit according to any one of claims 1 to 4, wherein the actuator is an electronic motor operatively connected to the capacity adjusting mechanism.

7. The hydraulic pump unit according to claim 6, wherein the electronic motor is connected to the capacity adjusting mechanism via a reduction gear mechanism.
